# EUROPÄISCHE PATENTSCHRIFT

(11) **EP 3 300 926 B1**
(45) Veröffentlichungstag und Bekanntmachung des Hinweises auf die Patenterteilung: **02.10.2019**
(21) Anmeldenummer: 17178551.2
(22) Anmeldetag: 29.06.2017
(51) Int. Cl.: B60C 11/03, B60C 11/13

(54) **FAHRZEUGLUFTREIFEN**
PNEUMATIC TYRES FOR A VEHICLE
PNEUMATIQUES DE VÉHICULE

(30) Priorität: 30.09.2016 DE 102016218980
(43) Veröffentlichungstag der Anmeldung: 04.04.2018
(73) Patentinhaber: Continental Reifen Deutschland GmbH, 30165 Hannover (DE)
(72) Erfinder: Robelo, Marco, 30159 Hannover (DE); Pagac, Lubomir, 020 01 Puchov (SK); Röger, Bernhard, 30823 Garbsen (DE)
(74) Vertreter: Finger, Karsten

(56) Entgegenhaltungen:
- DE-A1- 19 957 915
- US-A1- 2011 041 972

## Beschreibung

Die Erfindung betrifft einen Fahrzeugluftreifen mit einem profilierten Laufstreifen, welcher durch eine auf maximale Profiltiefe ausgeführte, zentrale Umfangsnut und durch zwei ebenfalls auf maximale Profiltiefe ausgeführte schulterseitige Umfangsnuten in zwei Schulterblockreihen und zwei mittlere Blockreihen gegliedert ist, wobei zwischen den Blöcken in den mittleren Blockreihen Quernuten verlaufen, welche sich in Draufsicht in Richtung der schulterseitigen Umfangsnuten kontinuierlich verbreitern, in die zentrale Umfangsnut und in die schulterseitigen Umfangsnuten einmünden und sich jeweils aus zwei unter einem stumpfen Winkel zueinander verlaufenden Quernutabschnitten zusammensetzen, wobei der Quernutabschnitt, welcher in die schulterseitige Umfangsnut mündet, eine geringere Erstreckung aufweist als der in die zentrale Umfangsnut mündende Quernutabschnitt, wobei die Blöcke in den mittleren Blockreihen durch jeweils eine zwischen den in Umfangsrichtung benachbarten Quernuten verlaufende Zusatznut in zwei im Wesentlichen gleich große und aneinander gekoppelte Blockteile gegliedert sind, und wobei die Zusatznuten unter einem Winkel von 5° bis 15° zur Umfangsrichtung und zwischen den längeren Quernutabschnitten der Quernuten verlaufen.

Ein PKW-Reifen der eingangs genannten Art ist beispielsweise aus der US 2011/041972 A1 bekannt. Dieser Reifen weist einen Laufstreifen mit zwei mittleren Blockreihen und zwei schulterseitigen Blockreihen auf, wobei sämtliche Blockreihen voneinander durch breite und auf Profiltiefe ausgeführte Umfangsrillen getrennt sind. Jede zweite Querrille in den mittleren Blockreihen sowie jede zweite Querrille in den schulterseitigen Blockreihen mündet mit einem einschnittartig ausgestalteten Abschnitt, welcher eine Breite von 0,5 mm bis 2,0 mm aufweist, laufstreifeninnenseitig in die jeweilige Umfangsrille. Der als Winterreifen mit einer Vielzahl von Einschnitten in den Profilblöcken des Laufstreifens versehene Reifen soll durch diese Maßnahmen eine geringere Geräuschentwicklung beim Abrollen aufweisen.

Ein weiterer PKW-Reifen ist aus der DE 199 57 915 A1 bekannt. Der Reifen weist einen Laufstreifen auf, bei welchem die Blöcke in den mittleren Blockreihen unmittelbar bei der zentralen Umfangsnut in Umfangsrichtung aneinander gekoppelt sind, indem hier zwischen den Blöcken jeweils nur eine schmale und seichte Rille verläuft. Die schmalen und seichten Rillen schließen an die breiten Quernuten zwischen den Blöcken der mittleren Blockreihen an. Der Laufstreifen wird dadurch unmittelbar im zentralen Bereich versteift, wodurch die Handlingeigenschaften günstig beeinflusst werden. Eine gute Durchströmung des Profils mit Wasser, was für die Aquaplaningeigenschaften von Vorteil ist, wird durch die weit zwischen die Blöcke der mittleren Blockreihen hinein verlaufenden Quernuten erreicht. Dieser bekannte Laufstreifen ist jedoch hinsichtlich der Performance auf schneeigem Untergrund verbesserungswürdig, insbesondere fehlen Profilstrukturen, die Schneetaschen zur Sicherstellung einer Schnee-Schnee-Reibung zur Verfügung stellen.

Der Erfindung liegt somit die Aufgabe zugrunde, einen Fahrzeugluftreifen der eingangs genannten Art zu verbessern, insbesondere soll eine besonders hohe Ausgewogenheit der für eine gute All-Season-Eignung erwünschten Eigenschaften erzielt werden, vor allem was die Laufstreifensteifigkeit betrifft, die für gute Handlingeigenschaften verantwortlich ist, ferner was das Wasserdrainagevermögen betrifft, welches für gute Aquaplaningeigenschaften sorgt, und ferner was die Fahreigenschaften auf schneeigem Untergrund betrifft. Dabei sollen im Laufstreifen Profilstrukturen, die als Schneetaschen wirken können, zur Verfügung stehen, um auf schneeigem Untergrund die sehr vorteilhafte Schnee- Schnee-Reibung zu gewährleisten, wobei die anderen erwähnten Eigenschaften nicht nachteilig beeinflusst werden sollen.

Gelöst wird die gestellte Aufgabe erfindungsgemäß dadurch, dass im blockinnenseitigen Endabschnitt des längeren Quernutabschnittes eine Grundanhebung ausgebildet ist, über deren Verlauf die Quernuttiefe auf 40 % bis 60 % der Profiltiefe reduziert ist, und wobei die Tiefe in den sonstigen Bereichen der Quernutabschnitte 70 % bis 90 % der Profiltiefe beträgt, wobei die Zusatznuten in Draufsicht und über ihre Erstreckung eine kontinuierlich zunehmende Breite aufweisen und mit ihrem einen breiteren Ende jeweils im Bereich einer Grundanhebung und mit ihrem anderen schmäleren Ende vorzugsweise jeweils außerhalb der Grundanhebung einmünden.

Gegenüber der aus der DE 19957915 A1 bekannten Ausführung wird daher bei einem erfindungsgemäß ausgeführten Laufstreifen die Anbindung der einzelne Profilblöcke der mittleren Blockreihen aneinander im mittleren Bereich dieser Blockreihen vorgesehen und die Steifigkeit des Laufstreifens dadurch auf eine für die Handlingeigenschaften wesentlich vorteilhaftere Weise erhöht. Die beiden Quernutabschnitte können dabei sowohl in die zentrale Umfangsnut als auch in die schulterseitigen Umfangsnuten Wasser ableiten, wobei die Zusatznuten eine vorteilhafte Wasserableitung unterstützen. Die beiden Quernutabschnitte können auf schneeigem Untergrund als Schneetaschen - Auffangbereiche für Schnee - wirken und somit in erwünschter Weise das Entstehen der auf schneeigem Untergrund besonders vorteilhaften Schnee- Schnee-Reibung ermöglichen. Die Zusatznuten unterstützen besonders vorteilhaft das Wasserableitvermögen im mittleren Laufstreifenbereich.

Bei einer bevorzugten Ausführungsform der Erfindung erstreckt sich die Grundanhebung über 15 % bis 50 % der Erstreckungslänge des längeren Quernutabschnittes. Die Grundanhebung kann daher den mittleren Laufstreifenbereich zur Unterstützung guter Handlingeigenschaften optimal versteifen. Diese Maßnahme ist darüber hinaus auch für einen gleichmäßigen Abrieb von Vorteil.

Diesbezüglich ist es auch vorteilhaft, wenn sich die Zusatznuten gerade erstrecken und wenn die Zusatznuten an ihrem breiteren Ende eine Breite von 1,5 mm bis 2,5 mm und an ihrem schmäleren Ende eine um 0,5 mm bis 1,0 mm geringere Breite aufweisen.

Die Zusatznuten weisen ferner eine insbesondere konstante Tiefe von 1,5 mm bis 2,5 mm auf, wobei diese gegenüber den Quernuten geringe Tiefe einer Aufweichung der Profilblöcke in den mittleren Blockreihen entgegenwirkt und damit die erwünschte Steifigkeit im mittleren Laufstreifenbereich unterstützt. Besonders vorteilhaft ist es, wenn die Tiefe der Zusatznuten mit der Tiefe der Grundanhebungen in den längeren Quernutabschnitten übereinstimmt, sodass eine weitgehend verwirbelungsfreie Durchströmung von Wasser ermöglicht ist.

Bevorzugt ist weiter eine Ausführung, bei der der kürzere Quernutabschnitt über 15 % bis 30 % der Erstreckungslänge der Quernut verläuft. Diese Maßnahme trägt zur Wirkung der Quernutabschnitte als Schneetaschen bei, wobei der stumpfe Winkel zwischen den Quernutabschnitten vorteilhafterweise 130° bis 150° beträgt, sodass die Blockkanten besonders wirksame Griffkanten zur Verfügung stellen können.

Auch die Breite der Quernuten ist für ihre Wirkung als Schneetaschen von Bedeutung. Wie bereits erwähnt, wird die Breite der Quernuten über ihren Verlauf, beginnend bei der zentralen Umfangsnut, kontinuierlich größer. An ihrem in die zentrale Umfangsnut einmündenden Enden weisen die Quernuten eine Breite von 1,5 mm bis 2,5 mm auf, an ihren in die schulterseitigen Umfangsnuten mündenden Enden eine Breite, die um 0,5 mm bis 1,5 mm größer ist.

Für ein geringes Reifen/Fahrbahngeräusch ist es ferner günstig, wenn die Quernutabschnitte nicht exakt in axialer Richtung verlaufen. Der in die zentrale Umfangsnut mündende Quemutabschnitt der Quernuten sollte daher unter einem Winkel von 5° bis 25° zur axialen Richtung verlaufen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines erfindungsgemäß ausgeführten profilierten Laufstreifens,
Fig. 2 einen Schnitt entlang der Linie B-B der Fig. 1,
Fig. 3 einen Schnitt entlang der Linie C-C der Fig. 1,
Fig. 4 einen Schnitt entlang der Linie D-D der Fig. 1,
Fig. 5 einen Schnitt entlang der Linie U-U der Fig. 1,
Fig. 6 einen Schnitt entlang der Linie V-V der Fig. 1,
Fig. 7 einen Schnitt entlang der Linie E-E der Fig. 1,
Fig. 8 einen Schnitt entlang der Linie F-F der Fig. 1,
Fig. 9 einen Schnitt entlang der Linie G-G der Fig. 1 und
Fig. 10 einen Schnitt entlang der Linie K-K der Fig. 1.

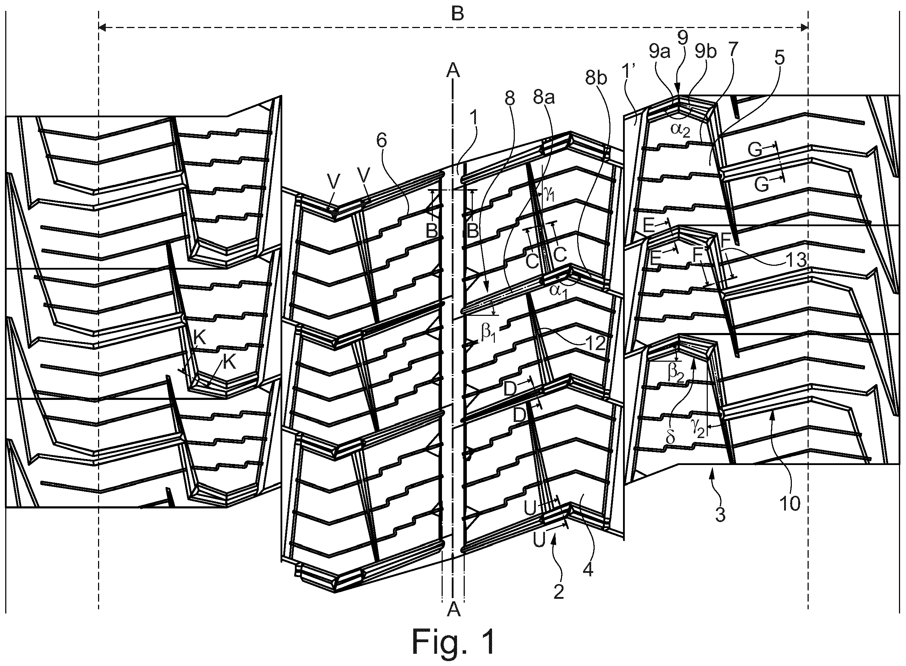

Fig. 1 zeigt einen Umfangsabschnitt eines Laufstreifens, welcher insbesondere als All-Season-Reifen für Personenkraftwagen, Vans oder Light-Trucks vorgesehen ist. Der Laufstreifen wird nachfolgend über seine Breite B im bodenberührenden Teil betrachtet, welche der Breite des statisch ermittelten Footprints gemäß E.T.R.T.O. Standards (Last bei 70 % der Tragfähigkeit bei einem Innendruck von 2,5 bar, Innendruck 85 % von 2,5 bar) entspricht. In den beiden Laufstreifenhälften befinden sich übereinstimmend gestaltete Profilstrukturen, wobei der Laufstreifen bei der gezeigten Ausführungsvariante nicht laufrichtungsgebunden ausgeführt ist und daher ohne bevorzugte Abrollrichtung am Fahrzeug montiert wird. Möglich ist jedoch auch eine laufrichtungsgebundene Ausgestaltung eines erfindungsgemäß ausgeführten Laufstreifens. In der Beschreibung und den Patentansprüchen angegebene Winkel von Nuten oder Nutabschnitten sind von den Mittellinien der Nuten oder Nutabschnitte ermittelt, Erstreckungslängen von Nuten oder Nutabschnitten sind ebenfalls entlang der Mittellinien der Nuten oder Nutabschnitte ermittelt.

Der Laufstreifen ist durch drei in Umfangsrichtung umlaufende breite Umfangsnuten 1,1' in vier im Wesentlichen gleich breite Blockreihen gegliedert, zwei mittlere Blockreihen 2 aus Blöcken 4 und zwei Schulterblockreihen 3 aus Blöcken 5. Bei der gezeigten Ausführungsform ist die die beiden mittleren Blockreihen 2 voneinander trennende Umfangsnut 1 eine gerade in Umfangsrichtung entlang des Reifenäquators A-A umlaufende Umfangsnut, die beiden jeweils eine mittlere Blockreihe 2 von einer Schulterblockreihe 3 trennenden Umfangsnuten 1' verlaufen, bedingt durch unter einem kleinen spitzen Winkel zur Umfangsrichtung orientierte Blockflanken der Blöcke 4, 5 in diesen Blockreihen 2, 3, in Draufsicht zickzackförmig.

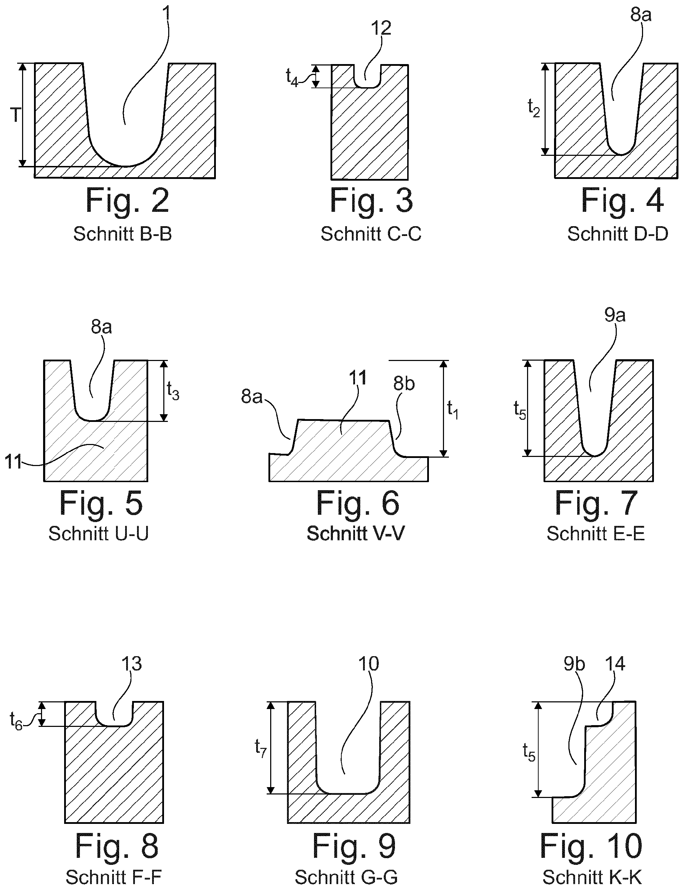

Die breiten Umfangsnuten 1, 1' weisen eine Tiefe T auf, die der maximal vorgesehenen Profiltiefe von üblicherweise 7,0 mm bis 9,0 mm entspricht, wie es beispielsweise in der Schnittdarstellung der Fig. 2, welche einen Querschnitt durch die zentrale Umfangsnut 1 zeigt, dargestellt ist.

Die Blöcke 4 in den mittleren Blockreihen 2 sind in Umfangsrichtung voneinander durch Quernuten 8, die Blöcke 5 in den schulterseitigen Blockreihen sind durch Quernuten 9, 10 und eine Zusatznut 13 voneinander getrennt, wobei sämtliche Quernuten 8 bzw. 9, 10 innerhalb einer Blockreihe 2, 3 zueinander parallel verlaufen.

Die Blöcke 4 in den beiden mittleren Blockreihen 2 und die Blöcke 5 in Schulterblockreihen 3 sind jeweils mit einer Anzahl von in Draufsicht zumindest abschnittsweise gerade oder zumindest abschnittsweise zickzackförmig verlaufenden Einschnitten 6, 7 versehen. Die Einschnitte 6, 7 können die übliche Breite von 0,4 mm bis 0,6 mm aufweisen, ihre Erstreckungsrichtung entspricht zumindest im Wesentlichen der Erstreckungsrichtung der Quernuten 8 bzw. der Quernuten 9, 10.

Die Besonderheiten der Ausgestaltung der mittleren Blockreihen 2 wird nun anhand einer der beiden Blockreihen 2 näher erläutert. Jede die Blöcke 4 voneinander trennende Quernut 8 setzt sich in Draufsicht aus zwei Quernutabschnitten 8a, 8b zusammen, wobei der eine Quernutabschnitt 8a in die zentrale Umfangsnut 1 mündet, der zweite Quernutabschnitt 8b in die schulterseitig verlaufende Umfangsnut 1'. Die beiden Quernutabschnitte 8a, 8b schließen miteinander einen stumpfen Winkel α₁ ein, welcher 130° bis 150° beträgt. Gegenüber der axialen Richtung verläuft der Quernutabschnitt 8a unter einem spitzen Winkel β₁, welcher 5° bis 25° beträgt. Der Quernutabschnitt 8b ist kürzer als der Quernutabschnitt 8a und erstreckt sich über 15 % bis 30 % der Erstreckungslänge der Quernut 8. In Draufsicht betrachtet verbreitert sich die Quernut 8 kontinuierlich zwischen der zentralen Umfangsnut 1 und der schulterseitigen Umfangsnut 1', wobei ihre Breite an der Laufstreifenaußenfläche im Mündungsbereich zur zentralen Umfangsnut 1 1,5 mm bis 2,5 mm beträgt und ihre Breite im Bereich ihres Mündungsbereiches zur schulterseitigen Umfangsnut 1 um 0,5 mm bis 1,5 mm größer ist.

Der Quernutabschnitt 8b weist eine insbesondere konstante Tiefe t₁ (Fig. 6) von 70 % bis 90 % der Profiltiefe T auf Wie ferner die Schnittdarstellung in Fig. 6 zeigt, ist im Quernutabschnitt 8a unmittelbar an den Quernutabschnitt 8b bzw. die Knickstelle zwischen den Quernutabschnitten 8a, 8b anschließend der Nutgrund angehoben, die derart gebildete Grundanhebung 11 erstreckt sich über 15 % bis 50 % der Erstreckungslänge des Quernutabschnittes 8a. In jenem Teil des Quernutabschnittes 8a, welcher außerhalb der Grundanhebung 11 verläuft, weist der Quernutabschnitt 8a eine insbesondere konstante Tiefe t₂ (Fig. 4) von 70% bis 90 % der Profiltiefe T auf. Im Bereich der Grundanhebung 11 beträgt die verbleibende Tiefe t₃ (Fig. 5, Fig. 6) 40 % bis 60 % der Profiltiefe T. Im Bereich der Grundanhebung 11 sind daher die in Umfangsrichtung benachbarten Blöcke 4 stärker aneinander angebunden, als in den sonstigen Bereichen des Verlaufes der Quernut 8.

Zwischen den in Umfangsrichtung benachbarten Quernutabschnitten 8a verläuft jeweils eine Zusatznut 12, die in den einen Quernutabschnitt 8a im Bereich der Grundanhebung 11 und in den anderen Quernutabschnitt 8a außerhalb der Grundanhebung 11 mündet. Die Zusatznuten 12 erstrecken sich zur Umfangsrichtung unter einem spitzen Winkel γ₁ von 3° bis 15°, vorzugsweise beträgt γ₁ mindestens 5°. Die Neigung der Zusatznuten 12 ist derart, dass ihr Abstand zur zentralen Umfangsnut 1 an ihren im Bereich der Grundanhebung 11 mündenden Enden größer ist als an ihren zweiten Enden. Die Zusatznuten 12 teilen die Blöcke 4 in im Wesentlichen gleich große Blockteile und weisen in Draufsicht einen trichterförmigen Verlauf mit kontinuierlich zunehmender Breite auf, derart, dass sie an jenem Ende, welches sich im Bereich der Grundanhebung 11 des einen Quernutabschnittes 8a befindet, ihre größere Breite von 1,5 mm bis 2,5 mm aufweisen Die Breite der Zusatznuten 12 nimmt kontinuierlich über ihre Erstreckung in Richtung des benachbarten Quernutabschnittes 8a ab, die Breite der Zusatznuten 12 an diesem Ende beträgt 0,5 mm bis 1,0 mm beträgt. Die Zusatznuten 12 weisen über ihre Erstreckung eine vorzugsweise konstante Tiefe t₄ (Fig. 3) auf, die 1,5 mm bis 2,5 mm, vorzugsweise 2 mm, beträgt.

Die in den Blöcken 5 der Schulterblockreihen 3 ausgebildeten Quernuten 9, 10 erstrecken sich in axialer Richtung jeweils etwa bis zur Mitte der Blöcke 5, die Quernuten 9 von den Umfangsnuten 1' ausgehend, die Quernuten 10 vom jeweiligen Laufstreifenrand betrachtet. Jede Quernut 9 weist über ihren Verlauf eine kontinuierlich zunehmende Breite auf, wobei ihre Breite im Mündungsbereich zur schulterseitigen Umfangsnut 1' 1,5 mm bis 2,5 mm beträgt, ihre Breite an ihren innerhalb der Blockreihe 3 befindlichen Enden ist um 1 mm bis 2 mm größer. Die Quernut 9 setzt sich aus zwei im Wesentlichen gleich große Erstreckungslängen aufweisenden Quernutabschnitten 9a, 9b zusammen, die miteinander einen stumpfen Winkel α₂ einschließen, welcher 130° bis 160° beträgt, wobei der Quernutabschnitt 9a zur axialen Richtung unter einem spitzen Winkel β₂ von 5° bis 10° verläuft. Wie die Schnittdarstellungen in Fig. 7 und auch in Fig. 10 zeigen, weist die Quernut 9 über den Großteil ihrer Erstreckung eine vorzugsweise konstante Tiefe t₅ von 70 % bis 90 % der Profiltiefe T auf.

Am blockinneren Ende jeder Quernut 9 schließt jeweils die Zusatznut 13 an, welche zur Umfangsrichtung unter einem spitzen Winkel γ₂ von 5° bis 10° bis in den Bereich neben der benachbarten Quernut 9 verläuft, wobei die Zusatznuten 13 derart geneigt sind, dass sie an ihrem an die Quernut 9 anschließenden Ende einen geringeren Abstand zur Umfangsnut 1' aufweisen als an ihrem zweiten, innerhalb der Blockreihe 3 befindlichen Ende. Die zueinander parallel verlaufenden Zusatznuten 13 weisen somit eine Erstreckungslänge auf, die im Wesentlichen der Erstreckungslänge der Blöcke 5 in Umfangsrichtung entspricht. Etwa im Bereich der Mitte jeder Zusatznut 13 mündet jeweils eine der Quernuten 10, die sich jeweils über den Laufstreifenrand hinaus fortsetzen, ein.

Wie die Schnittdarstellung in Fig. 8 zeigt, weist die Zusatznut 13 eine über ihren Verlauf insbesondere konstante Tiefe t₆ von 1,5 mm bis 2,5 mm, insbesondere 2,0 mm, auf. Die Zusatznuten 13 sind in Draufsicht trichterförmig gestaltet, ihre Breite nimmt daher beginnend von ihrem Anschlussbereich bzw. der Knickstelle zur Quernut 9 bis zu ihren zweiten Enden innerhalb der Blöcke 5 kontinuierlich ab, wobei sie an diesen Enden keine nennenswerte Breite bzw. ein Breite von bis zu 0,5 mm aufweisen.

Den Übergangsbereich zwischen der tieferen Quernut 9 und der wesentlich seichteren Zusatznut 13 zeigt die Schnittdarstellung in Fig. 10. Über eine Erstreckungslänge von 1,0 mm bis 2,0 mm befindet sich im Endabschnitt der Quernut 9 eine Grundanhebung 14, welche die geringe Tiefe t₆ der Zusatznut 13 aufweist. Die Grundanhebungen 14 versteifen die Schulterblockreihen, wirken sich somit besonders vorteilhaft auf die Handlingeigenschaften aus und unterstützen einen gleichmäßigen Abrieb.

Die Quernuten 10, die sich jeweils über den Laufstreifenrand hinaus fortsetzen, verlaufen innerhalb der Bodenaufstandsflächenbreite gerade und unter einem im Wesentlichen rechten Winkel zur Erstreckung der Zusatznuten 13. Gemäß der Schnittdarstellung in Fig. 9 weist die Quernut 10 eine Tiefe t₇ auf, welche 70 % bis 80 % der Profiltiefe T entspricht. Die Breite der Quernuten 10, welche in Richtung zum Laufstreifenrand kontinuierlich größer wird, beträgt 2,5 mm bis 3,5 mm.

Sämtliche Nuten - Umfangsnuten 1, Quernuten 8, 9, 10 und Zusatznuten 12, 13 - sind mit Nutflanken versehen, die unter einem Winkel von 1° bis 6° zur radialen Richtung verlaufen, wobei sich der Querschnitt dieser Nuten nach außen etwas öffnet. Insbesondere die Zusatznuten 12, 13 und die Quernut 10 weisen bevorzugt Nutflanken auf, die sich nahezu in radialer Richtung erstrecken, der diesbezügliche Winkel beträgt daher in der Größenordnung von 1°.

### Bezugsziffernliste

- 1, 1': Umfangsnut
- 2: mittlere Blockreihe
- 3: Schulterblockreihe
- 4: Block
- 5: Block
- 6: Einschnitt
- 7: Einschnitt
- 8: Quernut
- 8a, 8b: Quernutabschnitt
- 9: Quernut
- 9a, 9b: Quernutabschnitt
- 10: Quernut
- 11: Grundanhebung
- 12: Zusatznut
- 13: Zusatznut
- 14: Grundanhebung
- α₁, α₂, β₁, β₂, γ₁, γ₂.: Winkel
- B: Breite
- T: Profiltiefe
- t₁, t₂, t₃, t₄, t₅, t₆, t₇.: Tiefe

## Patentansprüche

1. Fahrzeugluftreifen mit einem profilierten Laufstreifen, welcher durch eine auf maximale Profiltiefe (T) ausgeführte, zentrale Umfangsnut (1) und durch zwei ebenfalls auf maximale Profiltiefe (T) ausgeführte schulterseitige Umfangsnuten (1') in zwei Schulterblockreihen (3) und zwei mittlere Blockreihen (2) gegliedert ist, wobei zwischen den Blöcken (4) in den mittleren Blockreihen (2) Quernuten (8) verlaufen, welche sich in Draufsicht in Richtung der schulterseitigen Umfangsnuten (1') kontinuierlich verbreitern, in die zentrale Umfangsnut (1) und in die schulterseitigen Umfangsnuten (1') einmünden und sich jeweils aus zwei unter einem stumpfen Winkel (α₁) zueinander verlaufenden Quernutabschnitten (8a, 8b) zusammensetzen, wobei der Quernutabschnitt (8b), welcher in die schulterseitige Umfangsnut (1') mündet, eine kürzere Erstreckungslänge aufweist als der in die zentrale Umfangsnut (1) mündende Quernutabschnitt (8a), wobei die Blöcke (4) in den mittleren Blockreihen (2) durch jeweils eine zwischen den in Umfangsrichtung benachbarten Quernuten (8) verlaufende Zusatznut (12) in zwei im Wesentlichen gleich große und aneinander gekoppelte Blockteile gegliedert sind, und wobei die Zusatznuten (12) unter einem Winkel (γ₁) von 5° bis 15° zur Umfangsrichtung und zwischen den längeren Quernutabschnitten (8a) der Quernuten (8) verlaufen,
**dadurch gekennzeichnet,**
**dass** im blockinnenseitigen Endabschnitt des längeren Quernutabschnittes (8a) eine Grundanhebung (11) ausgebildet ist, über deren Verlauf die Quernuttiefe auf 40 % bis 60 % der Profiltiefe (T) reduziert ist, und wobei die Tiefe (t₁, t₂) in den sonstigen Bereichen der Quernutabschnitte (8a, 8b) 70 % bis 90 % der Profiltiefe (T) beträgt, wobei die Zusatznuten (12) in Draufsicht und über ihre Erstreckung eine kontinuierlich zunehmende Breite aufweisen und mit ihrem einen breiteren Ende jeweils im Bereich einer Grundanhebung (11) und mit ihrem anderen schmäleren Ende vorzugsweise jeweils außerhalb der Grundanhebung (11) einmünden.

2. Fahrzeugluftreifen nach Anspruch 1, **dadurch gekennzeichnet, dass** sich die Grundanhebung (11) über 15% bis 50% der Erstreckungslänge des längeren Quernutabschnittes (8a) erstreckt.

3. Fahrzeugluftreifen nach Anspruch 1 oder 2, **dadurch gekennzeichnet, dass** sich die Zusatznuten (12) gerade erstrecken.

4. Fahrzeugluftreifen nach einem der Ansprüche 1 bis 3, **dadurch gekennzeichnet, dass** die Zusatznuten (12) an ihrem breiteren Ende eine Breite von 1,5 mm bis 2,5 mm und an ihrem schmäleren Ende eine um 0,5 mm bis 1,0 mm geringere Breite aufweisen.

5. Fahrzeugluftreifen nach einem der Ansprüche 1 bis 4, **dadurch gekennzeichnet, dass** die Zusatznuten (12) eine insbesondere konstante Tiefe (t₄) von 1,5 mm bis 2,5 mm aufweisen.

6. Fahrzeugluftreifen nach Anspruch 1, **dadurch gekennzeichnet, dass** sich der kürzere Quernutabschnitt über 15% bis 30% der Erstreckungslänge der Quernut (8) erstreckt.

7. Fahrzeugluftreifen nach Anspruch 1 oder 6, **dadurch gekennzeichnet, dass** der stumpfe Winkel (α₁) zwischen den Quernutabschnitten (8a, 8b) 130° bis 150° beträgt.

8. Fahrzeugluftreifen nach einem der Ansprüche 1, 6 oder 7, **dadurch gekennzeichnet, dass** der in die zentrale Umfangsnut (1) mündende Quernutabschnitt (8a) unter einem Winkel (β₁) von 5° bis 25° zur axialen Richtung verläuft.

9. Fahrzeugluftreifen nach einem der Ansprüche 1, oder 6 bis 8, **dadurch gekennzeichnet, dass** die Quernut (8) an ihrem in die zentrale Umfangsnut (1) einmündenden Ende eine Breite von 1,5 mm bis 2,5 mm aufweist.

10. Fahrzeugluftreifen nach einem der Ansprüche 1, oder 6 bis 9, **dadurch gekennzeichnet, dass** die Quernut (8) an ihrem in die schulterseitige Umfangsnut (1') mündenden Ende eine Breite aufweist, die um 0,5 mm bis 1,5 mm größer ist als an ihrem anderen Ende.

## Claims

1. Pneumatic vehicle tyre having a profiled tread, which is subdivided into two shoulder block rows (3) and two central block rows (2) by a central circumferential groove (1) formed to a maximum profile depth (T) and by two shoulder-side circumferential grooves (1') that are likewise formed to a maximum profile depth (T), wherein transverse grooves (8) extend between the blocks (4) in the central block rows (2), said transverse grooves (8) widening continuously in plan view in the direction of the shoulder-side circumferential grooves (1'), opening into the central circumferential groove (1) and into the shoulder-side circumferential grooves (1'), and each being made up of two transverse-groove portions (8a, 8b) that extend at an obtuse angle (α₁) to one another, wherein the transverse-groove portion (8b) that opens into the shoulder-side circumferential groove (1') has a shorter extension length than the transverse-groove portion (8a) that opens into the central circumferential groove (1), wherein the blocks (4) in the central block rows (2) are subdivided by in each case one auxiliary groove (12), extending between the transverse grooves (8) that are adjacent in the circumferential direction, into two block parts that are substantially the same size and are coupled together, and wherein the auxiliary grooves (12) extend at an angle of (γ₁) of 5° to 15° to the circumferential direction and between the longer transverse-groove portions (8a) of the transverse grooves (8),
**characterized**
**in that**, in the end portion, on the block inner side, of the longer transverse-groove portion (8a), a bottom elevation (11) is formed, over the course of which the transverse-groove depth is reduced to 40% to 60% of the profile depth (T), and wherein the depth (t₁, t₂) in the other regions of the transverse-groove portions (8a, 8b) is 70% to 90% of the profile depth (T), wherein the auxiliary grooves (12) have a continuously increasing width in plan view and along their extension, and open out with their one wider end in each case in the region of a bottom elevation (11) and with their other, narrower end preferably in each case away from the bottom elevation (11).

2. Pneumatic vehicle tyre according to Claim 1, **characterized in that** the bottom elevation (11) extends along 15% to 50% of the extension length of the longer transverse-groove portion (8a).

3. Pneumatic vehicle tyre according to Claim 1 or 2, **characterized in that** the auxiliary grooves (12) extend in a straight manner.

4. Pneumatic vehicle tyre according to one of Claims 1 to 3, **characterized in that** the auxiliary grooves (12) have a width of 1.5 mm to 2.5 mm at their wider end and a width that is smaller by 0.5 mm to 1.0 mm at their narrower end.

5. Pneumatic vehicle tyre according to one of Claims 1 to 4, **characterized in that** the auxiliary grooves (12) have an in particular constant depth (t₄) of 1.5 mm to 2.5 mm.

6. Pneumatic vehicle tyre according to Claim 1, **characterized in that** the shorter transverse-groove portion extends along 15% to 30% of the extension length of the transverse groove (8).

7. Pneumatic vehicle tyre according to Claim 1 or 6, **characterized in that** the obtuse angle (α₁) between the transverse-groove portions (8a, 8b) is 130° to 150°.

8. Pneumatic vehicle tyre according to one of Claims 1, 6 and 7, **characterized in that** the transverse-groove portion (8a) that opens into the central circumferential groove (1) extends at an angle (β₁) of 5° to 25° to the axial direction.

9. Pneumatic vehicle tyre according to one of Claims 1 and 6 to 8, **characterized in that** the transverse groove (8) has a width of 1.5 mm to 2.5 mm at its end that opens into the central circumferential groove (1).

10. Pneumatic vehicle tyre according to one of Claims 1 and 6 to 9, **characterized in that** the transverse groove (8) has a width at its end that opens into the shoulder-side circumferential groove (1') that is 0.5 mm to 1.5 mm greater than at its other end.

## Revendications

1. Pneumatique de véhicule avec une bande de roulement profilée, qui est divisée par une rainure périphérique centrale (1) réalisée à profondeur de profil maximale (T) et par deux rainures périphériques côté épaulements (1') également réalisées à profondeur de profil maximale (T) en deux rangées de blocs d'épaulement (3) et deux rangées de blocs médianes (2), dans lequel des rainures transversales (8) s'étendent entre les blocs (4) dans les rangées de blocs médianes (2), et s'élargissent en continu dans une vue en plan en direction des rainures périphériques côté épaulements (1'), débouchent dans la rainure périphérique centrale (1) et dans les rainures périphériques côté épaulements (1') et se composent chacune de deux parties de rainure transversale (8a, 8b) qui se rejoignent sous un angle obtus (α₁), dans lequel la partie de rainure transversale (8b), qui débouche dans la rainure périphérique côté épaulement (1'), présente une longueur d'extension plus courte que la partie de rainure transversale (8a) débouchant dans la rainure périphérique centrale (1), dans lequel les blocs (4) dans les rangées de blocs médianes (2) sont divisés respectivement par une rainure additionnelle (12) s'étendant entre les rainures transversales (8) voisines en direction périphérique en deux parties de bloc de taille essentiellement égale et couplées l'une à l'autre, et dans lequel les rainures additionnelles (12) s'étendent sous un angle (γ₁) de 5° à 15° par rapport à la direction périphérique et entre les parties de rainure transversale plus longues (8a) des rainures transversales (8),
**caractérisé en ce qu'**une surélévation de fond (11) est formée dans la partie d'extrémité côté intérieur de bloc de la partie de rainure transversale plus longue (8a), sur le tracé de laquelle la profondeur de rainure transversale est réduite à 40 % à 60 % de la profondeur de profil (T), et dans lequel la profondeur (t₁, t₂) dans les autres régions des parties de rainure transversale (8a, 8b) vaut 70 % à 90 % de la profondeur de profil (T), dans lequel les rainures additionnelles (12) présentent dans une vue en plan et sur leur extension une largeur croissante en continu et débouchent avec leur première extrémité plus large respectivement dans la région d'une surélévation de fond (11) et avec leur autre extrémité plus étroite de préférence respectivement à l'extérieur de la surélévation de fond (11).

2. Pneumatique de véhicule selon la revendication 1, **caractérisé en ce que** la surélévation de fond (11) s'étend sur 15 % à 50 % de la longueur d'extension de la partie de rainure transversale plus longue (8a).

3. Pneumatique de véhicule selon une revendication 1 ou 2, **caractérisé en ce que** les rainures additionnelles (12) s'étendent en ligne droite.

4. Pneumatique de véhicule selon l'une quelconque des revendications 1 à 3, **caractérisé en ce que** les rainures additionnelles (12) présentent à leur extrémité plus large une largeur de 1,5 mm à 2,5 mm et à leur extrémité plus étroite une largeur plus faible de 0,5 mm à 1,0 mm.

5. Pneumatique de véhicule selon l'une quelconque des revendications 1 à 4, **caractérisé en ce que** les rainures additionnelles (12) présentent en particulier une profondeur constante (t₄) de 1,5 mm à 2,5 mm.

6. Pneumatique de véhicule selon la revendication 1, **caractérisé en ce que** la partie de rainure transversale plus courte s'étend sur 15 % à 30 % de la longueur d'extension de la rainure transversale (8).

7. Pneumatique de véhicule selon une revendication 1 ou 6, **caractérisé en ce que** l'angle obtus (α₁) entre les parties de rainure transversale (8a, 8b) vaut 130° à 150°.

8. Pneumatique de véhicule selon l'une quelconque des revendications 1, 6 ou 7, **caractérisé en ce que** la partie de rainure transversale (8a) débouchant dans la rainure périphérique centrale (1) s'étend sous un angle (β₁) de 5° à 25° par rapport à la direction axiale.

9. Pneumatique de véhicule selon l'une quelconque des revendications 1, ou 6 à 8, **caractérisé en ce que** la rainure transversale (8) présente à son extrémité débouchant dans la rainure périphérique centrale (1) une largeur de 1,5 mm à 2,5 mm.

10. Pneumatique de véhicule selon l'une quelconque des revendications 1, ou 6 à 9, **caractérisé en ce que** la rainure transversale (8) présente à son extrémité débouchant dans la rainure périphérique côté épaulement (1') une largeur, qui est 0,5 mm à 1,5 mm plus grande qu'à son autre extrémité.
